# EUROPÄISCHE PATENTANMELDUNG

(11) **EP 1 508 713 A1**
(43) Veröffentlichungstag der Anmeldung: **23.02.2005**
(21) Anmeldenummer: 04019115.7
(22) Anmeldetag: 12.08.2004
(51) Int. Cl.: F16D 13/38

(54) **Reibungskupplung, insbesondere Ein- oder Mehrscheibenkupplung, für ein Kraftfahrzeug**

(30) Priorität: 21.08.2003 DE 10338363; 15.10.2003 DE 10347785
(71) Anmelder: ZF FRIEDRICHSHAFEN AG, 88046 Friedrichshafen (DE)
(72) Erfinder: Mensch, Waldemar, 97422 Schweinfurt (DE); Orlamünder, Andreas, 97422 Schweinfurt (DE)

(57) **Zusammenfassung**

Für eine Reibungskupplung, mit einer Eingangsseite, einer Ausgangsseite und wenigstens einer um eine Drehachse drehbaren Reibflächenanordnung zur Drehmomentübertragung zwischen der Eingangsseite und der Ausgangsseite; wobei die Reibflächenanordnung mehrere Scheiben aufweist, mit wenigstens einer Reibscheibe und wenigstens einer Anpressscheibe; wobei Federelemente (23a, 23b) einer Lüftfederanordnung jeweils wenigstens einen an einer zugeordneten (9) der Scheiben angeordneten Basisabschnitt (Z) und jeweils wenigstens eine von dem Basisabschnitt vorstehende Federzunge (F1, F2) aufweisen, wobei die Federzungen eine Betriebsstellung einnehmen, in der sie in axialer und bezogen auf den Radius der Drehung um die Drehachse in im Wesentlichen tangentialer Richtung von dem Basisabschnitt vorstehen, wird vorgeschlagen, dass wenigstens einige der Federelemente (23) jeweils zwei in im Wesentlichen entgegengesetzte tangentiale Richtungen vom jeweiligen Basisabschnitt (Z) vorstehende Federzungen (F1, F2) aufweist, oder/und dass die einzigen Federzungen einer ersten Gruppe von Federelementen im Wesentlichen in einer ersten tangentialen Richtung und die einzigen Federzungen einer zweiten Gruppe von Federelemente im Wesentlichen in einer zweiten, zur ersten im Wesentlichen entgegengesetzten tangentialen Richtung von dem jeweiligen Basisabschnitt vorstehen.

## Beschreibung

Die Erfindung betrifft eine Reibungskupplung, insbesondere eine so genannte Ein- oder Mehrscheiben-Reibungskupplung, mit einer Eingangsseite, einer Ausgangsseite und wenigstens einer um eine Drehachse drehbaren Reibflächenanordnung zur Drehmomentübertragung zwischen der Eingangsseite und der Ausgangsseite; wobei die Reibflächenanordnung mehrere Scheiben aufweist, mit wenigstens einer Reibscheibe und wenigstens einer Anpressscheibe, und wobei die wenigstens eine Reibscheibe, die einer Seite von Eingangsseite und Ausgangsseite zugeordnet ist, entgegen der elastischen Rückstellkraft einer zumindest zwischen zwei der Scheiben wirkenden Lüftfederanordnung einspannbar ist zwischen zwei in Richtung der Drehachse bewegbaren Anpressscheiben oder/und zwischen einer in Richtung der Drehachse verlagerbaren Anpressscheibe und der axial im Wesentlichen stationären Widerlagerscheibe, die der anderen Seite von Eingangsseite und Ausgangsseite zugeordnet sind.

Die Erfindung betrifft speziell auch eine Reibungskupplung, insbesondere eine so genannte Ein- oder Mehrscheiben-Reibungskupplung, mit einer Eingangsseite, einer Ausgangsseite und wenigstens einer um eine Drehachse drehbaren Reibflächenanordnung zur Drehmomentübertragung zwischen der Eingangsseite und der Ausgangsseite; wobei die Reibflächenanordnung mehrere Scheiben aufweist, mit wenigstens einer Reibscheibe, wenigstens einer Anpressscheibe und gewünschtenfalls einer Widerlagerscheibe, sowie im Falle wenigstens zweier Reibscheiben mit wenigstens einer Zwischenscheibe; wobei im Falle wenigstens zweier Reibscheiben die beiden Reibscheiben bzw. jeweils zwei Reibscheiben in Richtung der Drehachse durch eine Zwischenscheibe voneinander getrennt sind; und wobei die wenigstens eine Reibscheibe und gegebenenfalls die wenigstens eine Zwischenscheibe, die einer Seite von Eingangsseite und Ausgangsseite zugeordnet ist/sind, entgegen der elastischen Rückstellkraft einer zumindest zwischen zwei der Scheiben wirkenden Lüftfederanordnung einspannbar ist/sind zwischen zwei in Richtung der Drehachse bewegbaren Anpressscheiben oder/und zwischen einer in Richtung der Drehachse verlagerbaren Anpressscheibe und der axial im Wesentlichen stationären Widerlagerscheibe, die der anderen Seite von Eingangsseite und Ausgangsseite zugeordnet sind.

Eine derartige Reibungskupplung ist beispielsweise aus der DE 100 25 533 A1 bekannt. Gemäß dieser Konstruktion umfassen Federelemente der Lüftfederanordnung in axialer Richtung zwischen benachbarten Scheiben sich erstreckende Schraubendruckfedern oder Schraubendruckfederabschnitte, die über einen Teilbereich ihrer axialen Erstreckung zumindest in radialer Richtung gegen Bewegung gehalten sind.

Aus der DE 199 04 136 A1 ist eine weitere Konstruktion der angesprochenen Art bekannt, bei der die Federelemente der Lüftfederanordnung jeweils wenigstens einen an einer zugeordneten der Scheiben angeordneten Basisabschnitt und jeweils wenigstens eine von dem Basisabschnitt vorstehende Federzunge aufweisen, wobei die Federzungen eine Betriebsstellung einnehmen, in der sie in axialer und bezogen auf den Radius der Drehung um die Drehachse in im Wesentlichen tangentialer Richtung von dem Basisabschnitt vorstehen.

Eine weitere Mehrscheiben-Reibungskupplung mit einer mehrere Scheiben in der Art von Lamellen aufweisenden Reibflächenanordnung ist aus der DE 195 45 972 A1 bekannt.

Die Lüftfederanordnung gemäß den Konstruktionen von DE 199 04 136 A1 und DE 100 25 523 A1 hat die Aufgabe, ein sicheres Ausrücken ohne wesentliche Schleppmomente zu gewährleisten, indem etwa die Zwischenscheibe (oder Zwischenscheiben) und die Anpressscheibe (oder Anpressscheiben) auseinander gedrückt werden und damit von der dazwischen angeordneten Reibscheibe abheben. Es wurde festgestellt, dass die bekannten Lösungen relativ starken Fliehkrafteinflüssen unterliegen und auch andere Nachteile haben. So sind gemäß DE 100 25 533 A1 die Federn etwa über der halben Länge in einer Bohrung geführt. Dies wirkt zwar einer Auslenkung der Feder nach radial außen infolge der Fliehkraft entgegen. Durch die Führung in der Bohrung werden die Federn aber bei hohen Drehzahlen infolge der auftretenden Reibung an einer freien Federbewegung gehindert. Die Reibung wirkt einer axialen Beweglichkeit der federnden Windungen entgegen, was im Extremfall dazu führen kann, dass die Federn in einem komprimierten Zustand gehalten werden.

Bezug nehmend auf das Ausführungsbeispiel der Fig. 2 und 3 von DE 199 094 136 A1 sind die U-förmigen Federelemente an einem nach radial außen weisenden Zahn der Zwischenscheibe diesen umgreifend gehalten. Mangels sicherer Positionierung in einer definierten Soll-Stellung kann die Lage der Federzungen durch die Fliehkraft beeinflusst werden, was sich auf die Federeigenschaften auswirkt. Da alle Federzungen im gleichen Umlaufsinn tangential vorstehen, können in Folge des reibschlüssigen Eingriffs der Federzungenenden mit den benachbarten Anpressscheiben in tangentialer Richtung, also im Sinne eines Verdrehens der Zwischenscheibe und der Anpressscheiben relativ zueinander, wirkende Kräfte zwischen den Scheiben auftreten.

Es ist eine Aufgabe der vorliegenden Erfindung, eine Reibungskupplung der angesprochenen Art bereitzustellen, die gegenüber dem Stand der Technik hinsichtlich wenigstens einem der angesprochenen Probleme verbessert ist.

Zur Lösung dieser Aufgabe wird bereitgestellt eine Reibungskupplung, insbesondere eine so genannte Ein- oder Mehrscheiben-Reibungskupplung, mit einer Eingangsseite, einer Ausgangsseite und wenigstens einer um eine Drehachse drehbaren Reibflächenanordhung zur Drehmomentübertragung zwischen der Eingangsseite und der Ausgangsseite; wobei die Reibflächenanordnung mehrere Scheiben aufweist, mit wenigstens einer Reibscheibe und wenigstens einer Anpressscheibe und wobei die wenigstens eine Reibscheibe, die einer Seite von Eingangsseite und Ausgangsseite zugeordnet ist, entgegen der elastischen Rückstellkraft einer zumindest zwischen zwei der Scheiben wirkenden Lüftfederanordnung einspannbar ist zwischen zwei in Richtung der Drehachse bewegbaren Anpressscheiben oder/und zwischen einer in Richtung der Drehachse verlagerbaren Anpressscheibe und der axial im Wesentlichen stationären Widerlagerscheibe, die der anderen Seite von Eingangsseite und Ausgangsseite zugeordnet sind; und wobei Federelemente der Lüftfederanordnung jeweils wenigstens einen an einer zugeordneten der Scheiben angeordneten Basisabschnitt und jeweils wenigstens eine von dem Basisabschnitt vorstehende Federzunge aufweisen, wobei die Federzungen eine Betriebsstellung einnehmen, in der sie in axialer und bezogen auf den Radius der Drehung um die Drehachse in im Wesentlichen tangentialer Richtung von dem Basisabschnitt vorstehen.

Insbesondere wird bereitgestellt eine Reibungskupplung, insbesondere so genannte Ein- oder Mehrscheiben-Reibungskupplung, mit einer Eingangsseite, einer Ausgangsseite und wenigstens einer um eine Drehachse drehbaren Reibflächenanordnung zur Drehmomentübertragung zwischen der Eingangsseite und der Ausgangsseite; wobei die Reibflächenanordnung mehrere Scheiben aufweist, mit wenigstens einer Reibscheibe, wenigstens einer Anpressscheibe und gewünschtenfalls einer Widerlagerscheibe, sowie im Falle wenigstens zweier Reibscheiben mit wenigstens einer Zwischenscheibe; wobei im Falle wenigstens zweier Reibscheiben die beiden Reibscheiben bzw. jeweils zwei Reibscheiben in Richtung der Drehachse durch eine Zwischenscheibe voneinander getrennt sind; und wobei die wenigstens eine Reibscheibe und gegebenenfalls die wenigstens eine Zwischenscheibe, die einer Seite von Eingangsseite und Ausgangsseite zugeordnet ist/sind, entgegen der elastischen Rückstellkraft einer zumindest zwischen zwei der Scheiben wirkenden Lüftfederanordnung einspannbar ist/sind zwischen zwei in Richtung der Drehachse bewegbaren Anpressscheiben oder/und zwischen einer in Richtung der Drehachse verlagerbaren Anpressscheibe und der axial im Wesentlichen stationären Widerlagerscheibe, die der anderen Seite von Eingangsseite und Ausgangsseite zugeordnet sind; und wobei Federelemente der Lüftfederanordnung jeweils wenigstens einen an einer zugeordneten der Scheiben angeordneten Basisabschnitt und jeweils wenigstens eine von dem Basisabschnitt vorstehende Federzunge aufweisen, wobei die Federzungen eine Betriebsstellung einnehmen, in der sie in axialer und bezogen auf den Radius der Drehung um die Drehachse in im Wesentlichen tangentialer Richtung von dem Basisabschnitt vorstehen.

Die von der Erfindung bereitgestellte Reibungskupplung zeichnet sich erfindungsgemäß dadurch aus, dass wenigstens einige der Federelemente jeweils zwei in im Wesentlichen entgegengesetzte tangentiale Richtungen vom jeweiligen Basisabschnitt vorstehende Federzungen aufweist, oder/und dass die einzigen Federzungen einer ersten Gruppe von Federelementen im Wesentlichen in einer ersten tangentialen Richtung und die einzigen Federzungen einer zweiten Gruppe von Federelemente im Wesentlichen in einer zweiten, zur ersten im Wesentlichen entgegengesetzten tangentialen Richtung von dem jeweiligen Basisabschnitt vorstehen.

Dadurch, dass in entgegengesetzte tangentiale Richtungen vorstehende Federzungen vorgesehen sind, kompensieren sich die reibungsbedingt beim Komprimieren und Zurückfedern der Federzungen auftretenden und in Tangentialrichtung wirkenden Reibkräfte zumindest teilweise. Soweit das einzelne Federelement zwei in im Wesentlichen entgegengesetzte tangentiale Richtungen vom Basisabschnitt vorstehende Federzungen aufweist (dies ist bevorzugt), kompensieren sich auch an den Federzungen auftretende Fliehkräfte, so dass einem Verdrehen des Federelements infolge der Fliehkraft aus der Betriebsstellung entgegen gewirkt ist.

Es wird vor allem daran gedacht, dass wenigstens einige der in entgegengesetzte tangentiale Richtungen vorstehende Federzungen in der gleichen axialen Richtung vom jeweiligen Basisabschnitt vorstehen oder /und dass wenigstens einige der Federzungen der ersten Gruppe von Federelementen ebenso wie wenigstens einige der Federzungen der zweiten Gruppe von Federelementen in der gleichen axialen Richtung vom jeweiligen Basisabschnitt vorstehen.

Eine bevorzugte Ausgestaltung zeichnet sich dadurch aus, dass wenigstens einige der Federelemente an ihrem Basisabschnitt an der jeweiligen Scheibe gegen Abfallen oder/und gegen Verschwenken aus der Betriebsstellung gesichert sind. Dieser Weiterbildungsvorschlag ist auch als eigenständiger Erfindungsvorschlag von Interesse.

Dementsprechend stellt die Erfindung nach einem anderen Aspekt bereit eine Reibungskupplung, insbesondere so genannte Ein- oder Mehrscheiben-Reibungskupplung, mit einer Eingangsseite, einer Ausgangsseite und wenigstens einer um eine Drehachse drehbaren Reibflächenanordnung zur Drehmomentübertragung zwischen der Eingangsseite und der Ausgangsseite; wobei die Reibflächenanordnung mehrere Scheiben aufweist, mit wenigstens einer Reibscheibe, wenigstens einer Anpressscheibe und gewünschtenfalls einer Widerlagerscheibe, sowie im Falle wenigstens zweier Reibscheiben mit wenigstens einer Zwischenscheibe; wobei im Falle wenigstens zweier Reibscheiben die beiden Reibscheiben bzw. jeweils zwei Reibscheiben in Richtung der Drehachse durch eine Zwischenscheibe voneinander getrennt sind; und wobei die wenigstens eine Reibscheibe und gegebenenfalls die wenigstens eine Zwischenscheibe, die einer Seite von Eingangsseite und Ausgangsseite zugeordnet ist/sind, entgegen der elastischen Rückstellkraft einer zumindest zwischen zwei der Scheiben wirkenden Lüftfederanordnung einspannbar ist/sind zwischen zwei in Richtung der Drehachse bewegbaren Anpressscheiben, oder/und zwischen einer in Richtung der Drehachse verlagerbaren Anpressscheibe und der axial im Wesentlichen stationären Widerlagerscheibe, die der anderen Seite von Eingangsseite und Ausgangsseite zugeordnet sind; und wobei Federelemente der Lüftfederanordnung jeweils wenigstens einen an einer zugeordneten der Scheiben angeordneten Basisabschnitt und jeweils wenigstens eine von dem Basisabschnitt vorstehende Federzunge aufweisen, wobei die Federzungen eine Betriebsstellung einnehmen, in der sie in axialer und bezogen auf den Radius der Drehung um die Drehachse in im Wesentlichen tangentialer Richtung von dem Basisabschnitt vorstehen, die sich erfindungsgemäß dadurch auszeichnet, dass wenigstens einige der Federelemente an ihrem Basisabschnitt an der jeweiligen Scheibe gegen Abfallen oder/und gegen Verschwenken aus der Betriebsstellung gesichert sind.

Die Sicherung der Federelemente an ihrem Basisabschnitt an der jeweiligen Scheibe gegen Abfallen erhöht die Betriebssicherheit und erleichtert die Montage der Mehrscheiben-Reibungskupplung. Die Sicherung gegen ein Verschwenken aus der Betriebsstellung gewährleistet eine weitgehende Freiheit der Federcharakteristik von Fliehkrafteinflüssen. Insbesondere können die Federzungen in einer Stellung gesichert sein, in der Fliehkräfte die Federeigenschaften höchstens geringfügig beeinflussen.

Es wird beispielsweise daran gedacht, dass die an der jeweiligen Scheibe gesicherten Federelemente am Basisabschnitt formschlüssig oder stoffschlüssig an der Scheibe befestigt sind. Es ist bevorzugt, dass der jeweilige Basiabschnitt an der Scheibe festgenietet ist.

Besonders zweckmäßig ist, wenn die in im Wesentlichen entgegengesetzte tangentiale Richtungen vorstehende Federzungen aufweisenden Federelemente im Bereich eines für im Betrieb auftretende, auf die Federzungen wirkende Fliehkräfte maßgeblichen Federelement-Massenschwerpunkts an der jeweiligen Scheibe angebracht sind. Es kann so eine mehr oder weniger vollständige Kompensation der an den Federzungen auftretenden Fliehkräften erreicht werden, so dass die Gefahr eines Verstellens der Federzungen aus ihrer Soll-Stellung (der Betriebsstellung) reduziert oder eine zusätzliche Sicherung gegen eine derartige Verstellung erreicht ist.

Es kann wenigstens eine der Scheiben auf beiden axialen Seiten mit Federelementen bestückt sein. Von den Scheiben kann zumindest eine Zwischenscheibe mit Federelementen bestückt sein. Bevorzugt sind die Federelemente an radial vorstehenden Drehmitnahmevorsprüngen (ggf. Zähnen) der jeweiligen Scheibe angebracht.

Die Federzungen können vorteilhaft abgeflachte oder abgerundete Eingriffsabschnitte, insbesondere Eingriffsenden, zum Eingriff mit einer benachbarten Scheibe aufweisen. Hierdurch kann einerseits der Verschleiß reduziert und können andererseits in Tangentialrichtung wirkende Reibkräfte reduziert werden.

Eine bevorzugte Ausführungsform zeichnet sich dadurch aus, dass (die) zum Eingriff mit einer benachbarten Scheibe dienende(n) Eingriffsabschnitte, insbesondere Eingriffsenden der Federzungen von gegenüber dem jeweiligen Basisabschnitt in tangentialer Richtung versetzten, in dieser Richtung vorzugsweise vorstehenden Abschnitten, insbesondere Endabschnitten der Federzungen gebildet sind.

Eine andere, ebenfalls sehr zweckmäßige Ausführungsform zeichnet sich dadurch aus, dass die in entgegengesetzte tangentiale Richtungen vom jeweiligen Basisabschnitt vorstehenden Federzungen in axialer und in zur jeweiligen tangentialen Richtung entgegengesetzter tangentialer Richtung auf einander zu gebogen verlaufend ausgeführt sind, derart, dass zum Eingriff mit einer benachbarten Scheibe dienende Eingriffsabschnitte, insbesondere Eingriffsenden der Federzungen sich axial mit einem Zwischenabschnitt des jeweiligen Federelements, insbesondere mit dem Basisabschnitt überlappen. Es wird in diesem Zusammenhang insbesondere daran gedacht, dass die beiden Federzungen eines Federelements wenigstens einen gemeinsamen Eingriffsabschnitt oder in tangentialer Richtung eng benachbarte, vorzugsweise sich unmittelbar berührend in tangentialer Richtung aneinander anschließende Eingriffsabschnitte, insbesondere Eingriffsenden, aufweisen. Weiterbildend wird vorgeschlagen, dass der gemeinsame Eingriffsabschnitt oder die sich unmittelbar berührend in tangentialer Richtung aneinander anschließende Eingriffsabschnitte derart ausgeführt ist/sind, dass bei einer elastischen Verformung des Federelements im Zuge einer Kupplungsbetätigung der Eingriff mit der benachbarten Scheibe abrollend hergestellt oder verstärkt und abrollend verringert oder aufgehoben wird. Eine Abrollbewegung während der elastischen Verformung der Federzungen ist gegenüber einer Gleitbewegung vorteilhaft, weil die Reibung und der sich hieraus ergebende Kraftverlust wesentlich kleiner ist und der Verschleiß nahezu vermieden wird.

Man kann vorsehen, dass wenigstens eine der von dem Basisabschnitt in tangentialer Richtung vorstehenden Federzungen in wenigstens zwei in radialer Richtung gegeneinander versetzte Federzungen übergeht, die von der jeweiligen vom Basisabschnitt in der tangentialen Richtung vorstehenden Federzunge in der gleichen oder in der hierzu entgegengesetzten tangentialen Richtung vorstehen.

Es wird vor allem daran gedacht, dass die Federzungen für in radialer Richtung wirkende Biegekräfte deutlich biegesteifer sind als für in axialer Richtung wirkende Biegekräfte. Hierdurch wird besonders wirkungsvoll gewährleistet, dass Fliehkräfte die Federcharakteristik nicht oder höchstens geringfügig beeinflussen können. Man kann beispielsweise die Federzungen derart flächig ausführen und anordnen, dass ihre sich im Wesentlichen in axialer Richtung und in Umfangsrichtung erstreckende Dicke ihre sich im Wesentlichen in radialer Richtung erstreckende Breite deutlich unterschreitet.

Es ist vorteilhaft, wenn die Federzungen eine zu einem vom Basisabschnitt entfernten Zungenende abnehmende Breite aufweisen. Hierdurch kann einerseits eine annähernd gleichmäßige Biegespannung über die gesamte Zunge erreicht werden. Andererseits wird hierdurch erreicht, dass die Masse der Zunge mit zunehmendem Abstand von ihrer Befestigung an der jeweiligen Platte abnimmt. Es wird deswegen das fliehkraftbedingte Moment, welches im Sinne einer Verdrehung oder Verschwenkung des Federelements wirkt, vergleichsweise gering gehalten.

Regelmäßig wird es zweckmäßig sein, wenn die Federzungen gegenüber einem Außenradius der Reibscheiben radial weiter außen angeordnet sind.

Es wurde schon erwähnt, dass die Reibungskupplung mit zwei Reibscheiben und wenigstens einer Zwischenscheibe ausgeführt sein kann. Es wird speziell daran gedacht, dass die Reibflächenanordnung wenigstens zwei Reibscheiben und wenigstens eine Zwischenscheibe aufweist, und dass die Lüftfederanordnung zumindest zwischen der wenigstens einen Anpressscheibe und der Zwischenscheibe wirkt.

Es kommt durchaus in Betracht, die Erfindungs- und Weiterbildungsvorschläge auf eine nasslaufende Mehrscheibenkupplung, beispielsweise Lamellenkupplung, anzuwenden. Es wird aber vor allem daran gedacht, dass die Mehrscheiben-Reibungskupplung als trockenlaufende Kupplung ausgeführt ist. In der Regel werden die Reibscheiben mit Reibbelägen ausgeführt sein.

Die Erfindung stellt ferner einen Kraftfahrzeug-Antriebsstrang mit einer erfindungsgemäßen Mehrscheiben-Reibungskupplung zwischen einer Antriebseinheit und einem Getriebe bereit.

Die Erfindung wird im Folgenden anhand eines in den Figuren gezeigten Ausführungsbeispiels näher erläutert.
- Fig. 1: zeigt einen Längsschnitt durch ein Beispiel einer erfindungsgemäßen Mehrscheiben-Reibungskupplung.
- Fig. 2: ist eine perspektivische Ansicht auf einen Mitnahmezahn einer Zwischenscheibe der Reibungskupplung, der auf beiden axialen Seiten mit einem Federelement bestückt ist.
- Fig. 3: zeigt das Federelement in einer Seitenansicht (Fig. 3a), in einer Draufsicht (Fig. 3b) und in einer Draufsicht die Umfangslinie des Federelements in ausgelenktem Zustand der Federzungen (Fig. 3c).
- Fig. 4: bezieht sich auf ein weiteres Beispiel einer erfindungsgemäßen Mehrscheiben-Reibungskupplung mit andersartig gestalteten Federelementen und zeigt in einer Ansicht entsprechend Fig. 2 einen Mitnahmezahn einer Zwischenscheibe der Reibungskupplung, der auf beiden axialen Seiten mit einem solchen Federelement bestückt ist.

Die Erfindung wird ohne Beschränkung der Allgemeinheit anhand von Mehrscheiben-Reibungskupplungen erläutert, bei denen die Zwischenscheibe mit den Federelementen bestückt ist. Es kommt durchaus aber auch in Betracht, zusätzlich oder alternativ andere Scheiben der Mehrscheiben-Reibungskupplung mit Federelementen zu bestücken, beispielsweise die Anpressscheiben oder/und die Reibscheiben selbst. Die Erfindung bezieht sich insbesondere auch auf so genannte Einscheiben-Reibungskupplung mit nur einer Reibscheibe. In diesem Fall kann die Reibscheibe oder/und können die Anpressscheiben oder eine der Anpressscheiben mit Federelementen bestückt sein.

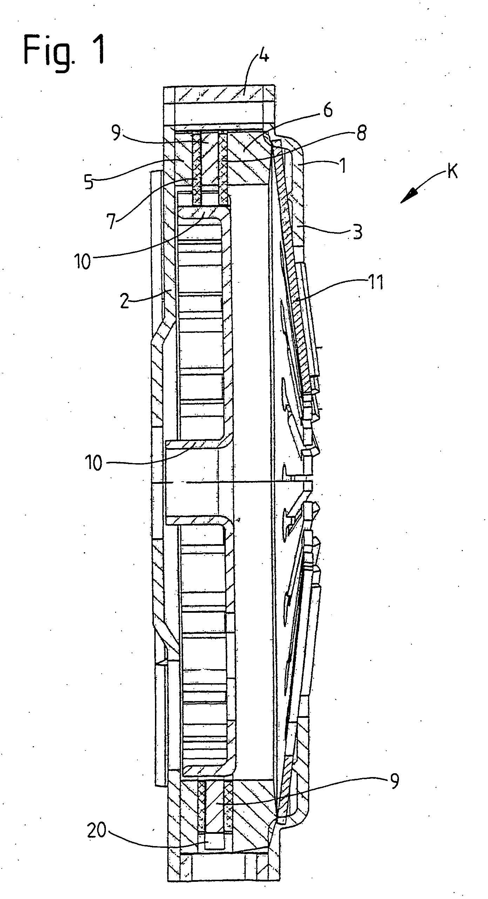

Fig. 1 zeigt eine Mehrscheiben-Reibungskupplung, wie sie bis auf die Auslegung der Lüftfederanordnung aus DE 199 04 136 A1 bekannt ist. Es wird auf dortige Fig. 1 verwiesen. Es werden im Folgenden die gleichen Bezugszeichen wie in DE 199 04 136 A1 verwendet. Der Inhalt der DE 199 04 136 A1 wird durch Bezugnahme vollständig in die Offenbarung der vorliegenden Anmeldung einbezogen.

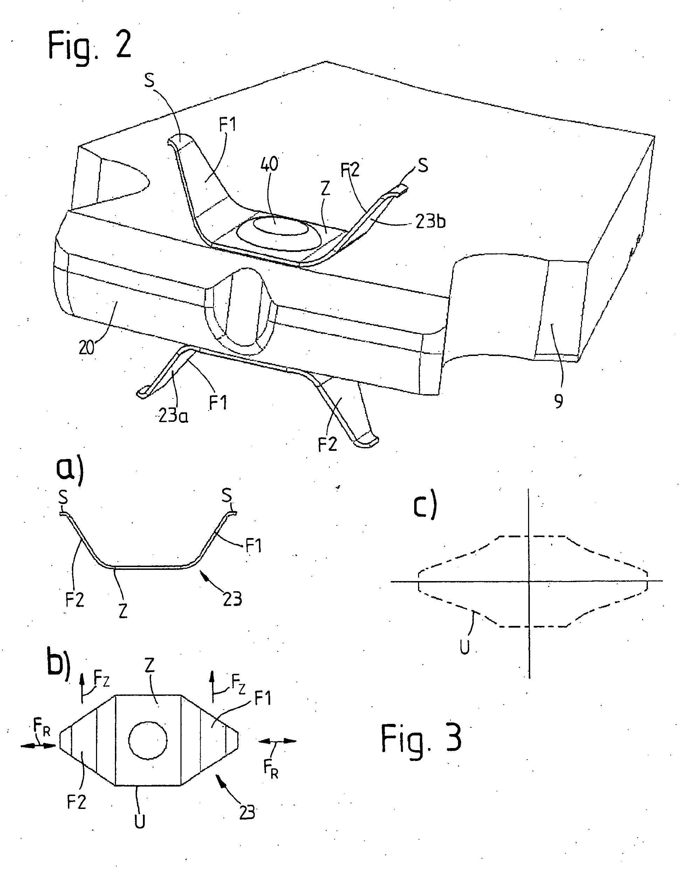

Die Mehrscheibenkupplung K der Fig. 1 weist ein Gehäuse 1 auf. Das Gehäuse weist zwei Gehäusedeckel 2 und 3 und einen dazwischen angeordneten Gehäusering 4 auf. In dem Gehäuse 1 sind zwei auch als Anpressplatten bezeichenbare Anpressscheiben 5 und 6 und eine auch als Zwischenplatte bezeichenbare Zwischenscheibe 9 angeordnet und stehen über Verzahnungen mit dem Gehäuse, genau dessen Gehäusering 4 in Drehmitnahmeverbindung (vgl. Fig. 3 von DE 199 04 136 A1).

Zwischen der der Anpressscheibe 5 und der Zwischenscheibe 9 ist eine Reibscheibe 7 angeordnet, und zwischen der Zwischenscheibe 9 und der Anpressscheibe 6 ist eine Reibscheibe 8 angeordnet. Die Reibscheiben 7 und 8 können mit Reibbelägen auf beiden axialen Seiten ausgeführt sein. Die Reibscheiben 7 und 8 sind drehfest und axial verschieblich auf einer Nabe 10 gehalten. Die Anpressscheibe 6 liegt an einer Membranfeder 11 an. Die Anpressscheibe 6 wird von der sich an dem Gehäusedeckel 3 abstützenden Membranfeder 11 gegen die benachbarte Reibscheibe 8 vorgespannt.

Die Reibscheibe 8 verschiebt bei Betätigung der Membranfeder zum Einrücken der Kupplung die Zwischenscheibe 9 gegen die nächste Reibscheibe 7, bis diese gegen die zweite Anpressscheibe 5 gelangt. Damit wird ein Kraftfluss von dem als Eingangsseite der Reibungskupplung dienenden Gehäuse zur als Ausgangsseite der Reibungskupplung dienenden Nabe 10 hergestellt.

Es sei noch angemerkt, dass die Anpressplatte 5 axial am Gehäuse festgelegt sein kann und insoweit auch als Widerlagerscheibe bezeichenbar ist.

Zur Trennung der Reibscheiben 7, 8 von der Zwischenscheibe 9 und den Anpressscheiben 5 und 6 wird zunächst die Membranfeder 11 verschwenkt, bis sich die daran anliegende Anpressscheibe 6 von der benachbarten Reibscheibe 7 weg bewegt. Damit wird der Kraftschluss von dem Gehäuse 1 zur Nabe 10 unterbrochen. Damit sich die Zwischenplatte 9 und die Anpressscheiben 5 und 6 von den Reibscheiben 7 und 8 trennen, ist eine Lüftfederanordnung vorgesehen, die zwischen der Zwischenplatte 9 und der Anpressplatte 5 bzw. 6 wirkt. Genauer, es ist ein erster Satz von Federn 23a zwischen der Anpressscheibe 5 und der Zwischenscheibe 9 angeordnet, und ein zweiter Satz von Federn 23b zwischen der Zwischenscheibe 9 und der Anpressscheibe 6. Vorzugsweise weist jeder dieser Federsätze gleich viele Federn 23a bzw. 23b auf. Die Federn sorgen dafür, dass bei Durchführung einer Ausrückbewegung die Zwischenscheibe 9 immer mittig zwischen der Anpressscheibe 6 und der Anpressscheibe 5 gehalten wird. Es erfolgt vorzugsweise somit für jede der zwischen der Anpressscheibe 6 und der Zwischenscheibe 9 einerseits und der Zwischenscheibe 9 und der Anpressscheibe 5 andererseits positionierten Reibscheiben (ggf. Kupplungsscheibenbereiche) ein gleicher Ausrückhub.

Die Federelemente 23a und 23b sind an den axialen Endflächen eines jeweiligen radial nach außen weisenden Zahns 20 einer Außenverzahnung der Zwischenscheibe 9 festgenietet, wie in Fig. 2 zu erkennen. Diese Außenverzahnung dient zur Drehmitnahmekopplung mit dem Gehäuse 1. Die Federelemente 23a, 23b befinden sich radial außerhalb des Außenumfangs der Reibscheiben 7 und 8.

Die Federelemente 23 (23a, 23b) sind als Blattfederelemente mit zwei Blattfederzungen F1 und F2 ausgeführt, die sich von einem am jeweiligen Zahn mittels einer Niete 40 befestigten Basisabschnitt Z ausgehend in Umfangs- bzw. Drehrichtung sowie in axialer Richtung erstrecken. Bevorzugt ist eine mittige Befestigung der Federelemente, wobei die Federelemente in Bezug auf die Befestigungsmittel vorzugsweise symmetrisch ausgeführt sind, so dass sich an den Federzungen F1 und F2 wirkende Fliehkräfte Fz gegenseitig aufheben. Die Federzungen sind so ausgeführt, dass sich ihre Breite in Richtung zur Zungenspitze S verringert, vorzugsweise derart, dass eine annähernd gleichmäßige Biegespannung über die gesamte Zungenlänge erreicht wird. Ferner wird durch die abnehmende Zungenbreite und damit abnehmende lokale Zungenmasse erreicht, dass mit zunehmendem Abstand vom Basisabschnitt Z weniger Trägheitsmasse vorhanden ist. Hierdurch wird das Moment, welches durch die Fliehkraft entsteht und das Federelement verdrehen will, gering gehalten. Dies kann dann Bedeutung haben, wenn das Federelement etwa aufgrund von Fertigungstoleranzen nicht optimal, also nicht mittig, befestigt ist.

Wie in den Fig. 2 und 3 zu erkennen, sind die Federelemente flächig ausgeführt, so dass sie bezogen auf die wirkenden Fliehkräfte Fz sehr biegesteif sind. Fliehkräfte können damit die Federcharakteristik höchstens sehr geringfügig beeinflussen.

Die Zungenspitzen S reiben beim Zusammendrücken bzw. Entlasten (Einkuppeln und Auskuppeln) auf der Oberfläche der Anpressscheibe 5 (ggf. dem Schwungrad) bzw. der Anpressscheibe 6, und zwar an einem axial gerichteten Oberflächenabschnitt eines jeweiligen Drehmitnahmezahns. Um die Reibung und damit den Verschleiß zu minimieren, sind die Zungenspitzen S gerundet ausgeführt.

Es soll darauf hingewiesen werden, dass neben den Fliehkrkäften Fz, die auf die Federzungen F1 und F2 wirken, auch noch die zwischen den Zungenspitzen S und der benachbarten Scheibe 5 bzw. 6 wirkenden Reibkräfte eine Rolle spielen können. Die gezeigte Konstruktion bietet den Vorteil, dass die beim Einkuppeln bzw. Auskuppeln jeweils wirkenden Reibkräfte an den beiden Zungenspitzen jeweils in entgegengesetzter Richtung wirken, sich also im Wesentlichen kompensieren, so dass zwischen der Zwischenscheibe 9 einerseits und den Scheiben 5 und 6 andererseits keine wesentliche tangentiale Kraft wirkt.

Fig. 3c zeigt die Umfangslinie U eines jeweiligen Federelements 23 in Draufsicht für den Fall eines axialen Zusammendrückens zwischen der Zwischenscheibe 9 und der zugeordneten Anpressscheibe 5 bzw. 6.

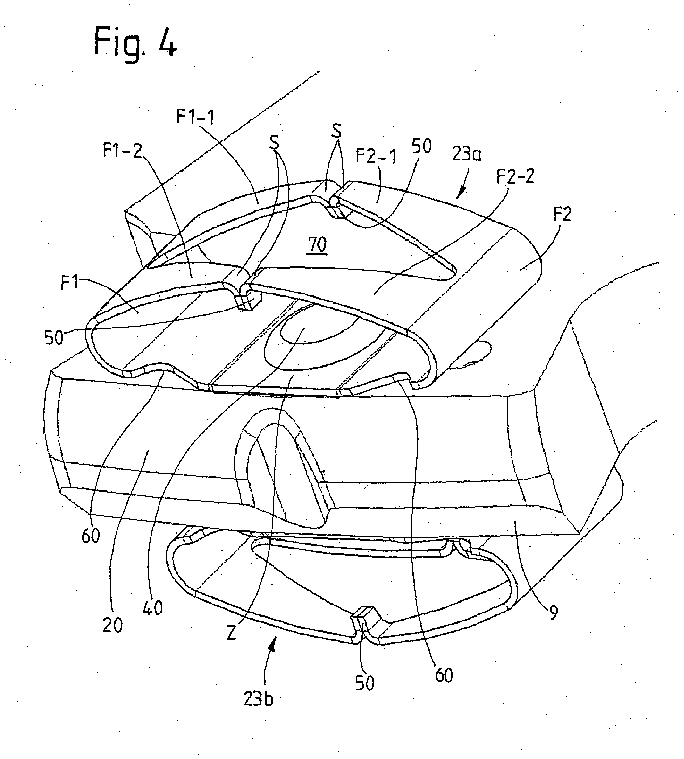

Bezug nehmend auf Fig. 4 werden gleiche und analoge Bauteile mit gleichen Bezugszeichen wie für die Ausführungsbeispiele der Fig. 1 bis 3 verwendet.

Gemäß dem Beispiel der Fig. 4 sind die sich tangential vom Basisabschnitt Z erstreckenden Federzungen F1 und F2 einmal umgebogen und aufeinander zugeführt, so dass sie sich an in Richtung zum Basisabschnitt Z axial vorstehenden Stützlaschen 50 berühren. Beim gezeigten Ausführungsbeispiel gabeln sich die Federzungen F1 und F2 auf, so dass Teilzungen F2-1, F2-2 bzw. F1-1, F1-2 gebildet sind, die in den Abstützlaschen 50 enden. Die Teil-Federzungen kontaktieren die jeweilige Gegenplatte in den Abschnitten S, die direkt über der Mitte des Basisabschnitts Z liegen. Es kommt während der elastischen Verformung der Federelemente deswegen im Wesentlichen nicht zu einer Gleitbewegung der Federzungen relativ zur Gegenplatte, sondern primär zu einer Art Abrollbewegung. Dies hat den Vorteil, dass die Reibung und der sich daraus ergebende Kraftverlust wesentlich kleiner ist und Verschleiß nahezu vermieden wird.

Die Teil-Federzungen begrenzen eine Aussparung 70, durch die ein Vernietwerkzeug für den Niet 40 hindurch geführt werden kann. Es können also wie beim Ausführungsbeispiel der Fig. 2 und 3 die Zwischenplatte beidseitig mit Nieten vernietet werden, wobei ein Niet zwei auf entgegengesetzten axialen Seiten angeordnete Federelemente hält.

Zu den Stützlaschen 50, auch als Anschlaglaschen 50 bezeichenbar, ist noch auszuführen, dass diese Laschen gewährleisten, dass sich die Endbereiche der Teil-Federzungen nicht übereinander schieben können. Die Länge der Laschen ist so zu bemessen, dass sie die Anpresskraft nicht am Basisabschnitt Z abstützen, bevor der nicht dargestellte Reibbelag der nicht dargestellten Kupplungsscheibe verschlissen ist. Die Laschen können aber gewünschtenfalls durchaus eine definierte Endanschlagfunktion bereitstellen.

Die Federzungen F1 und F2 weisen in dem sich an den Basisabschnitt Z anschließenden Zungenabschnitt am radial oberen und unteren Rand eine Ausnehmung 60 auf, die zur Einstellung einer gewünschten Kraftkennlinie des Federelements dient.

Insgesamt hat die Ausführung der Federelemente gemäß Fig. 4 den Vorteil, dass die Spannungen im Federelement vergleichsweise gering sind, da sich die elastische Verformung über einen wesentlich längeren Materialbereich verteilen kann, nämlich über. die gesamte Federzunge F1 bzw. F2 einschließlich der Teil-Federzungen F1-1, F1-2 bzw. F2-1, F2-2. Da der verformbare Bereich größer bzw. länger ist, sind größere Federwege möglich. Durch die angesprochene Rollreibung an der Kontaktstelle zur Nachbarscheibe gibt es weniger bis kein Verschleiß und keinen oder zumindest keinen wesentlichen Kraftverlust.

Die Federelemente gemäß Fig. 2 und 3 einerseits sowie gemäß Fig. 4 andererseits können vorteilhaft auch bei Einscheiben-Kupplungen ohne Zwischenplatte zum Einsatz kommen.

Für eine Reibungskupplung, mit einer Eingangsseite, einer Ausgangsseite und wenigstens einer um eine Drehachse drehbaren Reibflächenanordnung zur Drehmomentübertragung zwischen der Eingangsseite und der Ausgangsseite; wobei die Reibflächenanordnung mehrere Scheiben aufweist, mit wenigstens einer Reibscheibe und wenigstens einer Anpressscheibe; wobei Federelemente einer Lüftfederanordnung jeweils wenigstens einen an einer zugeordneten der Scheiben angeordneten Basisabschnitt und jeweils wenigstens eine von dem Basisabschnitt vorstehende Federzunge aufweisen, wobei die Federzungen eine Betriebsstellung einnehmen, in der sie in axialer und bezogen auf den Radius der Drehung um die Drehachse in im Wesentlichen tangentialer Richtung von dem Basisabschnitt vorstehen, wird vorgeschlagen, dass wenigstens einige der Federelemente jeweils zwei in im Wesentlichen entgegengesetzte tangentiale Richtungen vom jeweiligen Basisabschnitt vorstehende Federzungen aufweist, oder/und dass die einzigen Federzungen einer ersten Gruppe von Federelementen im Wesentlichen in einer ersten tangentialen Richtung und die einzigen Federzungen einer zweiten Gruppe von Federelemente im Wesentlichen in einer zweiten, zur ersten im Wesentlichen entgegengesetzten tangentialen Richtung von dem jeweiligen Basisabschnitt vorstehen.

## Patentansprüche

1. Reibungskupplung, insbesondere so genannte Ein- oder Mehrscheiben-Reibungskupplung, mit einer Eingangsseite (1), einer Ausgangsseite (10) und wenigstens einer um eine Drehachse drehbaren Reibflächenanordnung (5, 7, 9, 8, 6) zur Drehmomentübertragung zwischen der Eingangsseite und der Ausgangsseite;
wobei die Reibflächenanordnung mehrere Scheiben (5, 7, 9, 8, 6) aufweist, mit wenigstens einer Reibscheibe (7,8), wenigstens einer Anpressscheibe (6; 5) und gewünschtenfalls einer Widerlagerscheibe (5), sowie im Falle wenigstens zweier Reibscheiben (7, 8) mit wenigstens einer Zwischenscheibe (9);
wobei im Falle wenigstens zweier Reibscheiben (7, 8) die beiden Reibscheiben (7, 8) bzw. jeweils zwei Reibscheiben in Richtung der Drehachse durch eine Zwischenscheibe (9) voneinander getrennt sind;
und wobei die wenigstens eine Reibscheibe (7, 8) und gegebenenfalls die wenigstens eine Zwischenscheibe (9), die einer Seite von Eingangsseite und Ausgangsseite zugeordnet ist/sind, entgegen der elastischen Rückstellkraft einer zumindest zwischen zwei der Scheiben wirkenden Lüftfederanordnung (23a, 23b) einspannbar ist/sind zwischen zwei in Richtung der Drehachse bewegbaren Anpressscheiben (6, 5) oder/und zwischen einer in Richtung der Drehachse verlagerbaren Anpressscheibe (6) und der axial im Wesentlichen stationären Widerlagerscheibe (5), die der anderen Seite von Eingangsseite und Ausgangsseite zugeordnet sind;
und wobei Federelemente (23a, 23b) der Lüftfederanordnung jeweils wenigstens einen an einer zugeordneten (9) der Scheiben angeordneten Basisabschnitt (Z) und jeweils wenigstens eine von dem Basisabschnitt vorstehende Federzunge (F1, F2) aufweisen, wobei die Federzungen eine Betriebsstellung einnehmen, in der sie in axialer und bezogen auf den Radius der Drehung um die Drehachse in im Wesentlichen tangentialer Richtung von dem Basisabschnitt vorstehen;
**dadurch gekennzeichnet,**
**dass** wenigstens einige der Federelemente (23a, 23b) jeweils zwei in im Wesentlichen entgegengesetzte tangentiale Richtungen vom jeweiligen Basisabschnitt vorstehende Federzungen (F1, F2) aufweist, oder/und
**dass** die einzigen Federzungen einer ersten Gruppe von Federelementen im Wesentlichen in einer ersten tangentialen Richtung und die einzigen Federzungen einer zweiten Gruppe von Federelemente im Wesentlichen in einer zweiten, zur ersten im Wesentlichen entgegengesetzten tangentialen Richtung von dem jeweiligen Basisabschnitt vorstehen.

2. Reibungskupplung nach Anspruch 1, **dadurch gekennzeichnet, dass** wenigstens einige der in entgegengesetzte tangentiale Richtungen vorstehende Federzungen (F1, F2) in der gleichen axialen Richtung vom jeweiligen Basisabschnitt vorstehen oder /und dass wenigstens einige der Federzungen der ersten Gruppe von Federelementen ebenso wie wenigstens einige der Federzungen der zweiten Gruppe von Federelementen in der gleichen axialen Richtung vom jeweiligen Basisabschnitt vorstehen.

3. Reibungskupplung nach Anspruch 1 oder 2 oder nach dem Oberbegriff von Anspruch 1, **dadurch gekennzeichnet, dass** wenigstens einige der Federelemente (23a, 23b) an ihrem Basisabschnitt (Z) an der jeweiligen Scheibe (9) gegen Abfallen oder/und gegen Verschwenken aus der Betriebsstellung gesichert sind.

4. Reibungskupplung nach Anspruch 3, **dadurch gekennzeichnet**, das die an der jeweiligen Scheibe (9) gesicherten Federelemente (23) am Basisabschnitt (Z) formschlüssig oder stoffschlüssig an der Scheibe befestigt sind.

5. Reibungskupplung nach Anspruch 4, **dadurch gekennzeichnet, dass** der jeweilige Basiabschnitt (Z) an der Scheibe (9) festgenietet ist.

6. Reibungskupplung nach einem der Ansprüche 1 bis 5, **dadurch gekennzeichnet, dass** die in im Wesentlichen entgegengesetzte tangentiale Richtungen vorstehende Federzungen (F1, F2) aufweisenden Federelemente (23) im Bereich eines für im Betrieb auftretende, auf die Federzungen wirkende Fliehkräfte maßgeblichen Federelement-Massenschwerpunkts an der jeweiligen Scheibe angebracht sind.

7. Reibungskupplung nach einem der Ansprüche 1 bis 6, **dadurch gekennzeichnet, dass** wenigstens eine (9) der Scheiben auf beiden axialen Seiten mit Federelementen (23) bestückt ist.

8. Reibungkupplung nach einem der Ansprüche 1 bis 7, dass von den Scheiben zumindest eine Zwischenscheibe (9) mit Federelementen (23) bestückt ist.

9. Reibungskupplung nach eine der Ansprüche 1 bis 8, **dadurch gekennzeichnet, dass** die Federelemente an radial vorstehenden Drehmitnahmevorsprüngen (20) der jeweiligen Scheibe (9) angebracht sind.

10. Reibungskupplung nach einem der Ansprüche 1 bis 9, **dadurch gekennzeichnet, dass** die Federzungen (F1, F3) abgeflachte oder abgerundete Eingriffsabschnitte, insbesondere Eingriffsenden (S), zum Eingriff mit einer benachbarten Scheibe (5; 6) aufweisen.

11. Reibungskupplung nach einem der Ansprüche 1 bis 10, **dadurch gekennzeichnet, dass** (die) zum Eingriff mit einer benachbarten Scheibe (5; 6) dienende(n) Eingriffsabschnitte, insbesondere Eingriffsenden (S) der Federzungen (F1, F3) von gegenüber dem jeweiligen Basisabschnitt in tangentialer Richtung versetzten, in dieser Richtung vorzugsweise vorstehenden Abschnitten, insbesondere Endabschnitten der Federzungen gebildet sind.

12. Reibungskupplung nach einem der Ansprüche 1 bis 10, **dadurch gekennzeichnet, dass** die in entgegengesetzte tangentiale Richtungen vom jeweiligen Basisabschnitt vorstehenden Federzungen in axialer und in zur jeweiligen tangentialen Richtung entgegengesetzter tangentialer Richtung auf einander zu gebogen verlaufend ausgeführt sind, derart, dass zum Eingriff mit einer benachbarten Scheibe (5; 6) dienende Eingriffsabschnitte, insbesondere Eingriffsenden (S) der Federzungen (F1, F3) sich axial mit einem Zwischenabschnitt des jeweiligen Federelements, insbesondere mit dem Basisabschnitt überlappen.

13. Reibungskupplung nach Anspruch 12, **dadurch gekennzeichnet, dass** die beiden Federzungen eines Federelements wenigstens einen gemeinsamen Eingriffsabschnitt oder in tangentialer Richtung eng benachbarte, vorzugsweise sich unmittelbar berührend in tangentialer Richtung aneinander anschließende Eingriffsabschnitte, insbesondere Eingriffsenden, aufweisen.

14. Reibungskupplung nach Anspruch 13, **dadurch gekennzeichnet, dass** der gemeinsame Eingriffsabschnitt oder die sich unmittelbar berührend in tangentialer Richtung aneinander anschließende Eingriffsabschnitte derart ausgeführt ist/sind, dass bei einer elastischen Verformung des Federelements im Zuge einer Kupplungsbetätigung der Eingriff mit der benachbarten Scheibe abrollend hergestellt oder verstärkt und abrollend verringert oder aufgehoben wird.

15. Reibungskupplung nach einem der Ansprüche 1 bis 14, **dadurch gekennzeichnet, dass** wenigstens eine der von dem Basisabschnitt in tangentialer Richtung vorstehenden Federzungen in wenigstens zwei in radialer Richtung gegeneinander versetzte Federzungen übergeht, die von der jeweiligen vom Basisabschnitt in der tangentialen Richtung vorstehenden Federzunge in der gleichen oder in der hierzu entgegengesetzten tangentialen Richtung vorstehen.

16. Reibungskupplung nach einem der Ansprüche 1 bis 15, **dadurch gekennzeichnet, dass** die Federzungen (F1, F2) für in radialer Richtung wirkende Biegekräfte (F_{z}) deutlich biegesteifer sind als für in axialer Richtung wirkende Biegekräfte.

17. Reibungskupplung nach Anspruch 16, **dadurch gekennzeichnet, dass** die Federzungen (F1, F2) derart flächig ausgeführt und angeordnet sind, dass ihre sich im Wesentlichen in axialer Richtung und Umfangsrichtung erstreckende Dicke ihre sich im Wesentlichen in radialer Richtung erstreckende Breite deutlich unterschreitet.

18. Reibungskupplung nach einem der Ansprüche 1 bis 17, **dadurch gekennzeichnet, dass** die Federzungen (F1, F2) eine zu einem vom Basisabschnitt (Z) entfernten Zungenende (S) abnehmende Breite aufweisen.

19. Reibungskupplung nach einem der Ansprüche 1 bis 18, **dadurch gekennzeichnet, dass** die Federzungen (F1, F2) gegenüber einem Außenradius der Reibscheiben (7, 8) radial weiter außen angeordnet sind.

20. Reibungskupplung nach einem der vorhergehenden Ansprüche, **dadurch gekennzeichnet, dass** die Reibflächenanordnung wenigstens zwei Reibscheiben (7,8) und wenigstens eine Zwischenscheibe (9) aufweist, und dass die Lüftfederanordnung (23a, 23b) zumindest zwischen der wenigstens einen Anpressscheibe (6,5) und der Zwischenscheibe (9) wirkt.

21. Reibungskupplung nach einem der Ansprüche 1 bis 20, **dadurch gekennzeichnet, dass** sie als trockenlaufende Kupplung ausgeführt ist.

22. Reibungskupplung nach einem der Ansprüche 1 bis 21, **dadurch gekennzeichnet, dass** die Reibscheiben (7, 8) Reibbeläge aufweisen.

23. Kraftfahrzeug-Antriebsstrang mit einer Reibungskupplung (K) nach einem der vorhergehenden Ansprüche zwischen einer Antriebseinheit und einem Getriebe.
